# EUROPÄISCHE PATENTSCHRIFT

(11) **EP 2 539 673 B1**
(45) Veröffentlichungstag und Bekanntmachung des Hinweises auf die Patenterteilung: **11.09.2013**
(21) Anmeldenummer: 12708269.1
(22) Anmeldetag: 21.02.2012
(51) Int. Cl.: G01F 23/00, G01F 23/296

(54) **VORRICHTUNG ZUR MESSUNG DES FÜLLSTANDS VON FLÜSSIGKEITEN**
APPARATUS FOR THE MEASUREMENT OF LIQUID LEVEL
DISPOSITIF DE MESURE DE NIVEAU DE LIQUIDE

(30) Priorität: 23.02.2011 DE 202011003126 U; 23.12.2011 DE 202011109555 U
(43) Veröffentlichungstag der Anmeldung: 02.01.2013
(73) Patentinhaber: Gaslock GmbH, 58638 Iserlohn (DE)
(72) Erfinder: LIENENKAMP, Jörg, 58452 Witten (DE)
(74) Vertreter: Dörner, Kötter & Kollegen
(86) Internationale Anmeldenummer: PCT/EP2012/052908
(87) Internationale Veröffentlichungsnummer: WO 2012/113776

(56) Entgegenhaltungen:
- DE-C1- 19 820 482
- GB-A- 2 126 342
- US-A1- 2004 035 208

## Beschreibung

Die Erfindung betrifft eine Vorrichtung zur Messung des Füllstands von Flüssigkeiten in einem Tank mittels Ultraschall, bestehend aus einem Gehäuse, in dem eine piezoelektrische Scheibe vorgesehen ist, die mit einer Platine und einem Energiespeicher in Verbindung steht, und in dem eine Anzeigeeinheit angeordnet ist, wobei die piezoelektrische Scheibe auf ihrer dem Tank zugewandten Seite mit einer Schicht aus elastischem Material versehen ist.

Vorrichtungen zur Messung des Füllstands von Flüssigkeiten sind in vielfältiger Weise bekannt. Es existieren verschiedene Methoden der Füllstandsmessung. Es existieren mechanische Füllstandsmessungen mit Hilfe von Schwimmern, Messungen mit Hilfe der Ermittlung der elektrischen Leitfähigkeit, kapazitive Messungen, optische Messungen und dergleichen. Bei der hier betrachteten Art der Füllstandsmessung handelt es sich um die Messung des Füllstands mit Hilfe von Ultraschall. Hierbei werden von einem Sensor ausgesandte Ultraschall-Impulse reflektiert. Das reflektierte Signal wird von dem Sensor erfasst. Aus der gemessenen Laufzeit des Signals ergibt sich der Füllstand des jeweiligen Mediums.

Bei den bekannten Vorrichtungen zur Messung des Füllstands von Flüssigkeiten mit Hilfe von Ultraschall erfolgt in der Regel eine feste Montage der Vorrichtung an dem jeweiligen Tank. Der Montagepunkt ist üblicherweise an der Oberseite des Tanks vorgesehen. Von dort wird das Ultraschallsignal auf die in dem Tank befindliche Flüssigkeit gesandt und aus der Reflektion des Signals der Füllstand ermittelt. Es ist zudem möglich, die Vorrichtung an der Unterseite des Tanks vorzusehen. Man bedient sich in diesem Fall des gleichen Messprinzips. Nachteilig bei den bekannten Vorrichtungen ist der zusätzliche Aufwand aufgrund der Montage der Vorrichtungen. Zudem besteht nicht die Möglichkeit, die Geräte mobil einzusetzen. Dies erweist sich insbesondere nachteilig bei Tanks mit kleinen Füllmengen, die üblicherweise nicht vom Benutzer aufgefüllt, sondern vollständig ausgetauscht werden müssen. Hierzu zählt beispielsweise die Füllstandsmessung an Gasflaschen für Campingzwecke. An diesen ist eine feste Montage der Vorrichtungen aufgrund des hohen Aufwands nicht vertretbar. Zur Beseitigung dieses Problems ist aus der GB 2 126 342 A ein mobiles Füllstandsmessgerät bekannt, bei dem mittels Ultraschall der Füllstand in einem Behälter messbar ist und über eine Anzeigeeinrichtung verfügt. Zwar bietet das bekannte Füllstandsmessgerät einen mobilen Einsatz; es ist jedoch aufgrund seiner Abmessungen recht unhandlich.

Hier will die Erfindung Abhilfe schaffen. Der Erfindung liegt die Aufgabe zugrunde, eine Vorrichtung zur Messung des Füllstands von Flüssigkeiten in einem Tank mittels Ultraschall zu schaffen, bei der es keiner festen Montage an dem jeweiligen Tank bedarf und einen mobilen Einsatz ermöglicht, zudem einfach aufgebaut ist und welches einfach zu handhaben ist und eine sehr kompakte Bauweise aufweist. Gemäß der Erfindung wird diese Aufgabe dadurch gelöst, dass das Gehäuse aus zwei Teilen besteht, die gegen die Kraft einer Feder teleskopartig gegeneinander verfahrbar sind.

Mit der Erfindung ist eine Vorrichtung zur Messung des Füllstands von Flüssigkeiten in einem Tank mittels Ultraschall geschaffen, welches keiner festen Montage an dem jeweiligen Tank bedarf. Dies ist dadurch hervorgerufen, dass die Anordnung einer Schicht aus elastischem Material eine luftdichte Anordnung an dem jeweiligen Tank ermöglicht, so dass eine zuverlässige Ultraschall-Messung möglich ist. Die erfindungsgemäße Vorrichtung ermöglicht eine mobile Handhabung. Folglich ist dem Benutzer des jeweiligen Gastanks die Möglichkeit gegeben, lediglich bei Bedarf die Vorrichtung an den jeweiligen Tank anzuhalten und den Flüssigkeitsstand zu ermitteln. Die erfindungsgemäße Vorrichtung bietet eine zuverlässige und einfache Möglichkeit der Füllstandsmessung. Die zweiteilige Gestaltung des Gehäuses sowie deren teleskopartig gegeneinander verfahrbare Anordnung führen zudem zu einer einfachen Bedienbarkeit und kompakten Bauweise.

Bevorzugt ist die Anzeigeeinheit von einer LED-Leuchte gebildet. Die Verwendung einer LED-Leuchte ist zum einen geeignet, eine zuverlässige Anzeige zu schaffen, zum anderen haben LED-Leuchten einen geringen Energiebedarf, so dass die Funktionsdauer der Vorrichtung erhöht ist.

In Weiterbildung der Erfindung ist mindestens ein Gehäuseteil aus transparentem Material hergestellt. Vorteilhaft ist die Anzeigeeinheit innenliegend in dem Gehäuseteil angeordnet. Bei dieser Ausgestaltung kann auf das Vorsehen eines zusätzlichen Sichtfensters oder einer Öffnung im Gehäuse für die Sichtbarmachung der Anzeigeeinheit verzichtet werden. Vielmehr sind die Signale der Anzeigeeinheit durch den transparenten Gehäuseteil erkennbar.

In anderer Weiterbildung der Erfindung sind in dem Gehäuse an der Platine zwei Magnete angeordnet. Die Magnete üben eine Haltekraft auf den Tank aus, sodass die Vorrichtung dauerhaft an dem Tank angebracht werden kann, ohne hierfür zusätzliche Halteeinrichtungen vorsehen zu müssen. Gleichzeitig ermöglicht die Haltekraft der Magnete, dass die Gummischicht fest auf den Tank gepresst wird, wodurch die erforderliche Schallankopplung gewährleistet ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die schematische Darstellung einer Vorrichtung zur Messung des Füllstands von Flüssigkeiten in einem Tank mittels Ultraschall im Schnitt in einer an einem Tank angehaltenen Position;
- Fig. 2: die schematische Darstellung einer Vorrichtung zur Messung des Füllstands von Flüssigkeiten in einem Tank mittels Ultraschall im Schnitt in einer an einem Tank angehaltenen Position in einer anderen Ausführungsform;
- Fig. 3: die schematische Darstellung einer Vorrichtung zur Messung des Füllstands von Flüssigkeiten in einem Tank mittels Ultraschall im Schnitt in einer an einem Tank angehaltenen Position in einer weiteren Ausführungsform.

Die als Ausführungsbeispiel gewählte Vorrichtung 1 zur Messung des Füllstands von Flüssigkeiten in einem Tank 2 basiert auf dem Ultraschall-Messprinzip. Die Vorrichtung 1 besteht aus einem Gehäuse 3 aus Kunststoff, in dem eine piezoelektrische Scheibe 4 vorgesehen ist. Die Scheibe 4 ist aus Keramik hergestellt.

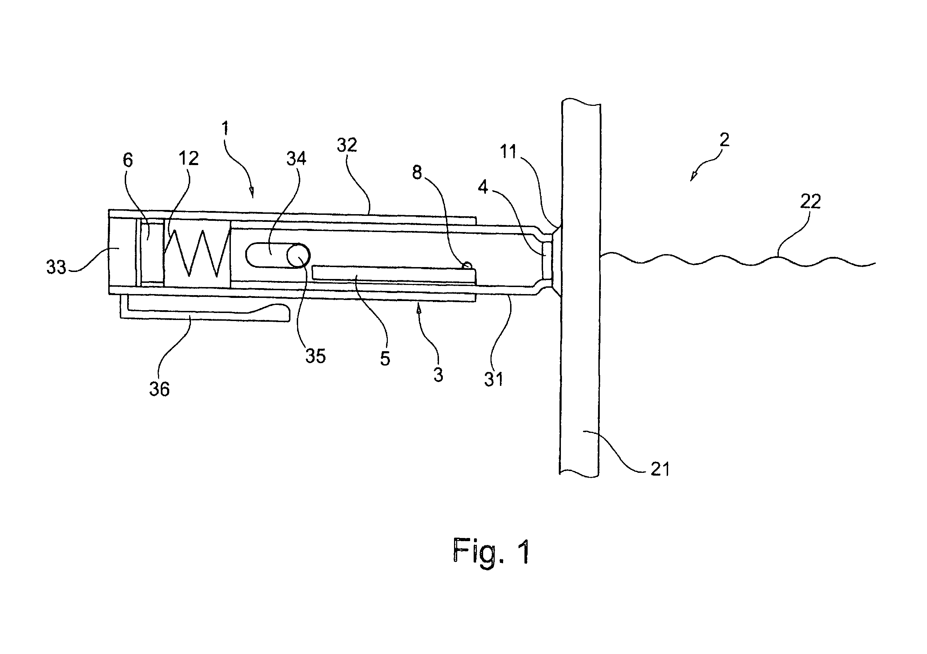

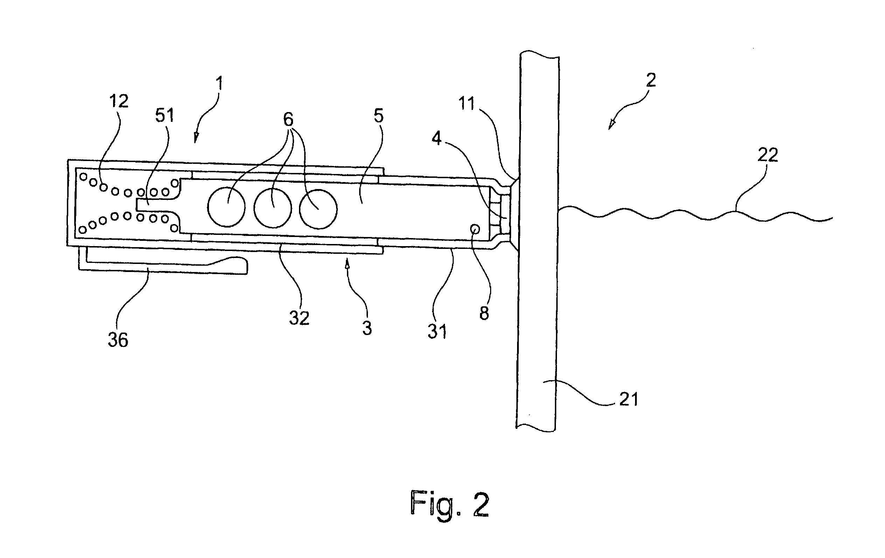

Das Gehäuse besteht im Ausführungsbeispiel nach den Figuren 1 und 2 aus zwei Teilen 31, 32, die gegen die Kraft einer Feder 12 teleskopartig gegeneinander verfahrbar sind, wobei das Gehäuseteil 31 in dem Gehäuseteil 32 geführt ist. Das Gehäuseteil 31 ist aus transparentem Material hergestellt. In Abwandlung des Ausführungsbeispiels ist es auch möglich, beide Gehäuseteile 31 und 32 aus transparentem Material herzustellen.

Im Ausführungsbeispiel nach Figur 1 ist das Gehäuseteil 32 an seinem dem Gehäuseteil 31 abgewandten Ende mit einem schraubbaren Deckel 33 verschließbar. Das Gehäuseteil 32 weist in diesem Fall ein Langloch 34 auf, in dem ein Stift 35 geführt ist, der an dem Gehäuseteil 31 radial hervorstehend angebracht ist. Durch die Länge des Langlochs 34 ist der Verfahrweg des Gehäuseteils 31 in dem Gehäuseteil 32 begrenzt. Gleichzeitig dient der Stift 35 der Entriegelung der Gehäuseteile 31 und 32, indem der Stift 35 unter Ausübung eines Drucks unter das Gehäuseteil 32 geschoben wird. Das Gehäuseteil 32 kann dann von dem Gehäuseteil 31 abgezogen werden. Im Ausführungsbeispiel nach Figur 2 ist das Gehäuseteil 32 an seinem dem Gehäuseteil 31 abgewandten Ende geschlossen ausgebildet.

An dem Gehäuseteil 32 ist seitlich eine Klemmeinrichtung 36 vorgesehen, die sich axial entlang des Gehäuses 3 erstreckt. An dem dem Gehäuseteil 32 abgewandten, freien Ende, welches sich außerhalb des Gehäuseteils 32 befindet, ist die piezo-elektrische Scheibe 4 angeordnet. Sie weist einen Durchmesser auf, der demjenigen des freien Endes des Gehäuseteils 31 entspricht.

Die Scheibe 4 steht in Verbindung mit einer Platine 5. Auf der Platine 5 ist eine Auswerteeinheit vorgesehen. Darüber hinaus ist auf der Platine eine Anzeigeeinheit 8 angeordnet, die im Ausführungsbeispiel von einer LED-Leuchte gebildet ist. Die Anordnung von mehreren LED-Leuchten ist ebenfalls möglich. Die Scheibe 4 steht darüber hinaus in Kontakt mit einem Energiespeicher 6, bei dem es sich im Ausführungsbeispiel um eine Batterie handelt. Der Energiespeicher 6 ist im Ausführungsbeispiel nach Figur 1 benachbart zum schraubbaren Deckel 33 angeordnet, sodass im Bedarfsfall ein Austausch des Energiespeichers 6 einfach möglich ist. Im Ausführungsbeispiel nach Figur 2 ist der Energiespeicher 6 dagegen auf der Platine 5 angeordnet, wobei dieser von drei Batterien gebildet ist. Zum Austausch des Energiespeichers 6 ist in diesem Fall eine - nicht dargestellte - Klappe im Gehäuse 3 vorgesehen. Das Gehäuseteil 32 ist in diesem Fall an seinem dem Gehäuseteil 31 abgewandten Ende geschlossen ausgebildet.

Auf ihrer dem Tank 2 zugewandten Seite ist die Scheibe 4 mit einer Schicht 11 aus elastischem Material versehen. Bei der Schicht 11 handelt es sich vorzugsweise um eine Gummischicht. Auch eine Schicht aus thermoplastischen Elastomeren ist möglich. Die Schicht 11 schließt beim Anlegen der Vorrichtung 1 an den Tank 2 Lufteinschlüsse aus, so dass eine fehlerfreie Betätigung der Vorrichtung 1 möglich ist. Es ist dadurch die bei Ultraschall-Messsonden erforderliche Trockenankopplung gewährleistet. Die Schicht 11 kann in Abwandlung des Ausführungsbeispiels auch napfartig ausgebildet sein, sodass sie das dem Gehäuseteil 32 abgewandte Ende des Gehäuseteils 31 bereichsweise umgibt.

Das Gehäuseteil 31 stützt sich über die Platine 5 an seinem einen Ende gegen die Feder 12 ab. Im Ausführungsbeispiel nach Figur 1 liegt die Feder 12 im Gehäuseteil 32 an dem Energiespeicher 6 an. Im Ausführungsbeispiel nach Figur 2 liegt die Feder 12 dagegen an dem geschlossenen Boden des Gehäuseteils 32 an (Figur 2). Die Feder 12 hat hierbei eine taillierte Ausbildung. Gleichzeitig weist die Platine 5 eine stegartige Verlängerung 51 auf.

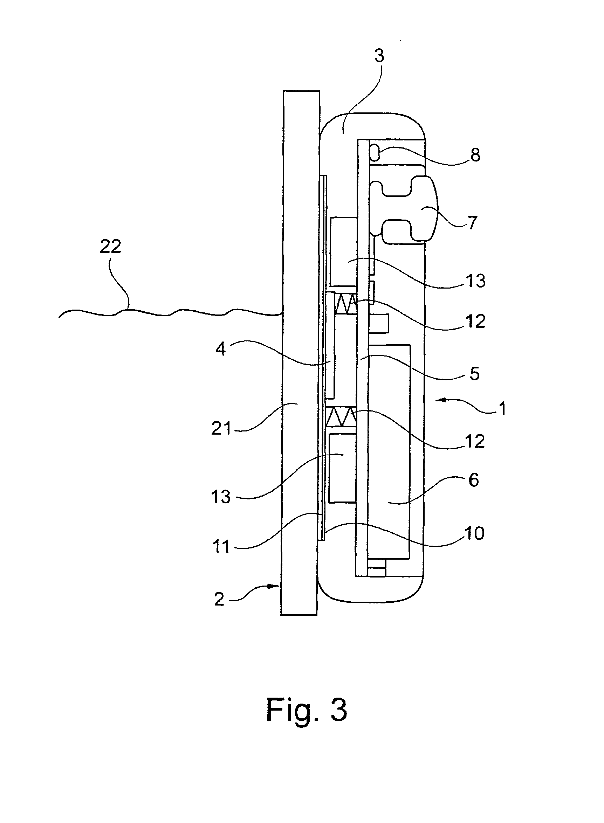

Im Ausführungsbeispiel nach Figur 3 ist das Gehäuse 3 einteilig ausgebildet und mit einer - nicht dargestellten - Klappe verschließbar. Auch steht die Scheibe 4 in Verbindung mit einer Platine 5. Die Platine 5 erstreckt sich im Wesentlichen über die gesamte Länge des Gehäuses 3. Auf der Platine 5 ist die Auswerteeinheit vorgesehen. Zudem ist auf der Platine 5 der Energiespeicher 6 angeordnet, bei dem es sich ebenfalls um eine Batterie handelt. Auch der Energiespeicher 6 steht mit der Scheibe 4 in Kontakt. Zudem weist die Vorrichtung nach Figur 3 auf der Platine 5 ein Betätigungsmittel 7 auf, bei dem es sich im Ausführungsbeispiel um einen Druckknopf handelt. Andere Betätigungsmittel sind ebenfalls einsetzbar. Darüber hinaus ist auf der Platine die Anzeigeeinheit 8 angeordnet, die ebenfalls von einer LED-Leuchte gebildet ist. Die Anordnung von mehreren LED-Leuchten ist auch möglich.

Die piezo-elektrische Scheibe 4 ist auf einer Metallplatte 10 angeordnet. Mit Hilfe der Metallplatte 10 ist die Sende- und Empfangsfläche der Vorrichtung im Verhältnis zur Größe der piezo-elektrischen Scheibe 4 wesentlich vergrößert, so dass die Sende- und Empfangsfläche ebenfalls vergrößert ist. Auf ihrer der Scheibe 4 abgewandten und damit dem Tank 2 zugewandten Seite ist die Metallplatte 10 mit einer Schicht 11 aus elastischem Material versehen. Die Gummischicht 11 schließt beim Anlegen der Vorrichtung 1 an den Tank 2 Lufteinschlüsse aus, so dass eine fehlerfreie Betätigung der Vorrichtung 1 möglich ist. Es ist dadurch die bei Ultraschall-Messsonden erforderliche Schallankopplung gewährleistet.

Die Metallplatte 10 ist mit der Platine 5 mittels Federn 12 verbunden. Die Federn 12 bewirken eine zuverlässige Verbindung zwischen der Metallplatte 10 und der Platine 5, so dass die Sende- und Empfangsqualität dauerhaft gewährleistet ist.

Benachbart zu den Federn 12 sind in dem Gehäuse 3 an der Platine 5 zwei Magnete 13 angeordnet. Die Magnete 13 dienen zur Befestigung der Vorrichtung 1 an dem Tank 2. Mit den Magneten 13 ist die Möglichkeit geschaffen, die Vorrichtung 1 an dem Tank 2 dauerhaft anzuordnen.

Bei der Benutzung der erfindungsgemäßen Vorrichtungen 1 zur Messung des Füllstands von Flüssigkeiten wird die Vorrichtung 1 an die Wand 21 des Tanks 2 angelegt, wie dies in den Figuren dargestellt ist. Die Vorrichtung 1 kommt in dieser Position mit ihrer Schicht 11 großflächig mit der Wand 21 des Tanks 2 in Kontakt. Wie den Figuren zu entnehmen ist, befinden sich zwischen der Schicht 11 und der Wand 21 keine Lufteinschlüsse. Es ist dadurch die für die Ultraschall-Messung der erfindungsgemäßen Vorrichtung 1 erforderliche Trockenschallankopplung vorhanden ist. Diese ermöglicht ein zuverlässiges Senden und Empfangen der Ultraschall-Signale.

Nach dem Aufsetzen der Vorrichtung 1 nach den Ausführungsbeispielen der Figuren 1 und 2 auf der Wand 21 des Tanks 2 wird vom Benutzer eine Kraft auf die Vorrichtung in Richtung der Wand 21 ausgeübt. Unter dem Einfluss dieser Kraft bewegt sich das Gehäuseteil 32 gegen die Kraft der Feder 12 in Richtung der Wand 21, sodass das Gehäuseteil 31 weiter in das Gehäuseteil 32 einfährt. Die Eintauchtiefe bzw. der Verfahrweg ist im Ausführungsbeispiel nach Figur 1 durch die Länge des Langlochs 34 in dem Gehäuseteil 32 begrenzt; im Ausführungsbeispiel nach Figur 2 durch die Eintauchtiefe des Steges 51 in die Feder 12. Bei Erreichen seiner maximalen Eintauchtiefe wird die Vorrichtung in Funktion gesetzt, da in diesem Zustand der in der Vorrichtung befindliche Stromkreis geschlossen wird. Im Ausführungsbeispiel nach Figur 2 erfolgt dies dadurch, dass der Steg 51 mit der Feder 12 in Kontakt tritt. Durch den geschlossenen Stromkreis werden von der piezoelektrischen Scheibe 4 Schallimpulse ausgesendet. Diese treten über die Metallplatte 10 durch die Schicht 11 sowie die Wand 21 in den Tank 2 ein. Nach dem Aufsetzen der Vorrichtung 1 nach den Ausführungsbeispielen der Figuren 1 und 2 auf der Wand 21 des Tanks 2 schaffen dagegen die Magnete 13 eine zuverlässige Anordnung an dem Tank 2. Durch die Magnetkraft ist die Schicht 11 fest auf die Wand 21 des Tanks 2 gepresst.

Soweit die jeweilige Vorrichtung 1 in einem Bereich des Tanks 2 angesetzt ist, in der sich keine Flüssigkeit befindet, wird der Schall von diesem unmittelbar reflektiert. Die ausgesendeten Schallimpulse werden daher nach einer äußerst kurzen Laufzeit wieder vom Empfänger der Vorrichtung empfangen. Über die Platine 5 mit ihrer Auswerteeinheit wird dies in der Anzeigeeinheit 8 durch ein Signal angezeigt. Im Ausführungsbeispiel wird dies in Form eines roten Leuchtsignals der vorgesehenen LED dargestellt. Ist dagegen die Vorrichtung 1 in einem Bereich angesetzt, in dem sich eine Flüssigkeit befindet, also im Ausführungsbeispiel unterhalb des mit 22 gekennzeichneten Füllstands der Flüssigkeit, werden die von der Vorrichtung 1 ausgesandten Ultraschall-Signale durch die Flüssigkeit transportiert. Von der der Vorrichtung 1 gegenüberliegenden Wand des Tanks 2 werden die Schallimpulse dann reflektiert und durch die Flüssigkeit wieder zurück transportiert, bis sie von der Vorrichtung 1 empfangen werden. Die Laufzeit, bis zu der die ausgesendeten Signale wieder von der Vorrichtung empfangen werden, ist daher deutlich größer, als in dem oben beschriebenen Fall. Auch diese empfangenen Signale werden an die auf der Platine befindliche Auswerteeinheit weitergeleitet, die die größere Laufzeit erkennt. Die Auswerteeinheit steuert die Anzeigeeinheit 8 an, um ein entsprechendes Signal auszulösen, welches im Ausführungsbeispiel durch eine grün leuchtende LED angezeigt wird.

Mit der erfindungsgemäßen Vorrichtung lässt sich in einfacher Weise der Füllstand mit Flüssigkeit auch kleiner Tanks anzeigen. Die genaue Bestimmung des Füllstands erfolgt, indem die Vorrichtung 1 auf die Wand 21 des Tanks 2 aufgesetzt wird und unter der auf die Vorrichtung 1 ausgeübten Kraft beziehungsweise Einschalten der Betätigungseinrichtung 7 die Vorrichtung 1 entlang der Wand 21 aufbeziehungsweise abwärts bewegt wird. Bei Erreichen des Füllstands wechselt die Anzeigeeinheit das Signal, so dass der Benutzer erkennt, auf welcher Höhe sich der Füllstand sich befindet. Aufgrund der Einfachheit und platzsparenden Bauweise ist die Vorrichtung mobil einsetzbar, so dass sie zum Beispiel in einer Tasche transportierbar ist und somit insbesondere bei Camping-Einsätzen ständig mitgeführt werden kann. Durch die Klemmeinrichtung 36 in den Ausführungsbeispielen der Figuren 1 und 2 ist zudem die Möglichkeit geschaffen, die Vorrichtung 1 an der Tasche eines Kleidungsstücks nach Art eines Schreibgeräts anzubringen. Die Gefahr eines Verlustes ist damit reduziert.

## Patentansprüche

1. Vorrichtung (1) zur Messung des Füllstands von Flüssigkeiten in einem Tank (2) mittels Ultraschall, bestehend aus einem Gehäuse (3), in dem eine piezoelektrische Scheibe (4) vorgesehen ist, die mit einer Platine (5) und einem Energiespeicher (6) in Verbindung steht, und in dem-eine Anzeigeeinheit (8) angeordnet ist, wobei die piezoelektrische Scheibe (4) auf ihrer dem Tank (2) zugewandten Seite mit einer Schicht (11) aus elastischem Material versehen ist, **dadurch gekennzeichnet, dass** das Gehäuse (3) aus zwei Teilen (31, 32) besteht, die gegen die Kraft einer Feder (12) teleskopartig gegeneinander verfahrbar sind.

2. Vorrichtung nach Anspruch 1, **dadurch gekennzeichnet, dass** das elastische Material Gummi ist.

3. Vorrichtung nach Anspruch 1, **dadurch gekennzeichnet, dass** das elastische Material ein thermoplastisches Elastomer ist.

4. Vorrichtung nach einem oder mehreren der vorgenannten Ansprüche, **dadurch gekennzeichnet, dass** die Anzeigeeinheit (8) von mindestens einer LED-Leuchte gebildet ist.

5. Vorrichtung nach einem oder mehreren der vorgenannten Ansprüche, **dadurch gekennzeichnet, dass** mindestens ein Gehäuseteil (31, 32) aus transparentem Material hergestellt ist.

6. Vorrichtung nach einem oder mehreren der vorgenannten Ansprüche, **dadurch gekennzeichnet, dass** die Anzeigeeinheit (8) innenliegend in dem Gehäuseteil (31) angeordnet ist.

7. Vorrichtung nach einem oder mehreren der vorgenannten Ansprüche, **dadurch gekennzeichnet, dass** die piezoelektrische Scheibe (4) auf einer Metallplatte (10) angeordnet ist.

8. Vorrichtung nach Anspruch 7, **dadurch gekennzeichnet, dass** die elektrische Verbindung der Metallplatte (10) mit der Platine (5) über Federn (12) erfolgt.

## Claims

1. Apparatus (1) for measurement of liquid level in a tank (2) by means of ultrasound, consisting of a housing (3) in which a piezoelectric disk (4) is provided, which is in contact with a circuit board (5) and an energy-storage device (6), and in which an indicator unit (8) is arranged, where the piezoelectric disk (4) is coated with a layer (11) of elastic material on its side facing the tank (2), **characterised in that** the housing (3) consists of two parts (31, 32) which can be moved telescopically against one another against the force of a spring (12).

2. Apparatus in accordance with claim 1, **characterised in that** the elastic material is rubber.

3. Apparatus in accordance with claim 1, **characterised in that** the elastic matenal is a thermoplastic elastomer.

4. Apparatus in accordance with any one or several of the aforementioned claims, **characterised in that** the indicator unit (8) is formed by at least one LED lamp.

5. Apparatus in accordance with any one or several of the aforementioned claims, **characterised in that** at least one part of the housing (31, 32) is made of transparent material.

6. Apparatus in accordance with any one or several of the aforementioned claims, **characterised in that** the indicator unit (8) is arranged in the interior of the housing part (31).

7. Apparatus in accordance with any one or several of the aforementioned claims, **characterised in that** the piezoelectric disk (4) is arranged on a metal plate (10).

8. Apparatus in accordance with claim 1, **characterised in that** the electrical contact between the metal plate (10) and the circuit board (5) is by means of springs (12).

## Revendications

1. Dispositif (1) de mesure de niveau de liquide dans un réservoir (2) au moyen d'ultrasons, comprenant un boîtier (3) dans lequel est prévue une rondelle (4) piézoétectrique reliée à une carte (5) et à un accumulateur d'énergie (6), et dans lequel est agencée une unité d'affichage (8), sachant que le disque piézoélectrique (4) comporte, sur son côté regardant le réservoir (2), une couche (11) en matériau élastique, **caractérisé en ce que** le boîtier (3) se compose de deux parties (31, 32) qu'il est possible de déplacer l'une contre l'autre de manière télescopique en vainquant la résistance d'un ressort (12).

2. Dispositif selon la revendication 1, **caractérisé en ce que** le matériau élastique est du caoutchouc.

3. Dispositif selon la revendication 1, **caractérisé en ce que** le matériau élastique est un élastomère thermoplastique.

4. Dispositif selon l'une ou plusieurs des revendications précédentes, **caractérisé en ce que** l'unité d'affichage (8) est formée par au moins un voyant à LED.

5. Dispositif selon l'une ou plusieurs des revendications précédentes, **caractérisé en ce qu'**au moins une partie du boîtier (31, 32) est fabriquée en matériau transparent.

6. Dispositif selon l'une ou plusieurs des revendications précédentes, **caractérisé en ce que** l'unité d'affichage (8) est agencée à l'intérieur, dans la partie du boîtier (31).

7. Dispositif selon l'une ou plusieurs des revendications précédentes, **caractérisé en ce que** le disque piézoélectrique (4) est agencé sur une plaque métallique (10).

8. Dispositif selon la revendication 7, **caractérisé en ce que** la jonction électrique entre la plaque métallique (10) et la carte (5) est assurée par des ressorts (12).
